# EUROPEAN PATENT APPLICATION

(11) **EP 4 092 456 A1**
(43) Date of publication of application: **23.11.2022**
(21) Application number: 22171388.6
(22) Date of filing: 03.05.2022
(51) Int. Cl.: G02B 5/08, G02B 26/12

(54) **METHODS, APPARATUSES AND SYSTEMS PROVIDING OPTICAL COATINGS FOR OPTICAL COMPONENTS**

(30) Priority: 21.05.2021 CN 202110557896
(71) Applicant: Hand Held Products, Inc., Fort Mill, SC 29707 (US)
(72) Inventor: LI, Jensen, Charlotte, 28202 (US); GUAN, PengXun, Charlotte, 28202 (US)
(74) Representative: Haseltine Lake Kempner LLP

(57) **Abstract**

Methods, apparatuses and systems for providing optical coatings for optical components are disclosed herein. An example optical component may comprise an optical coating, the optical coating comprising: a visible light reflective layer disposed adjacent a surface of the optical component; at least a first non-visible light reflective layer disposed adjacent the visible light reflective layer; and at least a second non-visible light reflective layer disposed adjacent the first non-visible light reflective layer.

## Description

### BACKGROUND

Optical components may be used to condition incident light (e.g., polarize a particular wavelength) generated by a light source (e.g., a high polarized laser source). Many optical components are plagued by technical challenges and limitations.

### BRIEF SUMMARY

Various embodiments described herein relate to methods, apparatuses and systems providing optical coatings for optical components, such as, for example, an optical component for a printing apparatus.

In accordance with various examples of the present disclosure, an optical component is provided. In some examples, the optical component comprises an optical coating. In some examples, the optical coating comprises: a visible light reflective layer disposed adjacent a surface of the optical component; at least a first non-visible light reflective layer disposed adjacent the visible light reflective layer; and at least a second non-visible light reflective layer disposed adjacent the first non-visible light reflective layer.

In accordance with various examples of the present disclosure, a method for manufacturing an optical component comprising an optical coating is provided. In some examples, the method comprises: depositing a visible light reflective layer unto at least a surface of the optical component; depositing at least a first non-visible light reflective layer unto the visible light reflective layer; and depositing at least a second non-visible light reflective layer unto the first non-visible light reflective layer.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates a schematic diagram depicting at least a portion of an optical system in accordance with various embodiments of the present disclosure is provided, according to one or more embodiments described herein;
FIG. 2 illustrates a schematic diagram depicting a side section view of an example optical component, according to one or more embodiments described herein;
FIG. 3 illustrates a flowchart diagram depicting an example method for producing an optical component, according to one or more embodiments described herein;
FIG. 4 illustrates a schematic diagram illustrating an example view of a laser subsystem, according to one or more embodiments described herein;
FIG. 5 illustrates an example optical assembly for printing content on print media, according to one or more embodiments described herein;
FIG. 6 illustrates an example schematic diagram depicting an optical assembly, according to one or more embodiments described herein;
FIG. 7 illustrates an example schematic diagram depicting a top section view of an optical assembly, according to one or more embodiments described herein;
FIG. 8 illustrates a graph depicting example reflectance level measurements of an example optical component, according to one or more embodiments described herein;
FIG. 9 illustrates a graph depicting example measurements of an example optical component, according to one or more embodiments described herein; and
FIG. 10 illustrates an example schematic diagram depicting an example printing apparatus, according to one or more embodiments described herein.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

Unless the context requires otherwise, throughout the specification and claims which follow, the word "comprise" and variations thereof, such as, "comprises" and "comprising" are to be construed in an open sense, that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, one or more particular features, structures, or characteristics from one or more embodiments may be combined in any suitable manner in one or more other embodiments.

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such component or feature may be optionally included in some embodiments, or it may be excluded.

The term "electronically coupled," "electronically coupling," "electronically couple," "in communication with," "in electronic communication with," or "connected" in the present disclosure refers to two or more components being connected (directly or indirectly) through wired means (for example but not limited to, system bus, wired Ethernet) and/or wireless means (for example but not limited to, Wi-Fi, Bluetooth, ZigBee), such that data and/or information may be transmitted to and/or received from these components.

The term "print media," refers to tangible, substantially durable physical material onto which text, graphics, images and/or the like may be imprinted and persistently retained over time. For example, print media generally take the form of derivatives of one or more of wood pulp or polymers, and may include conventional office paper, clear or tinted acetate media, newsprint, envelopes, mailing labels, product labels, and other kinds of labels. Thicker materials, such as cardstock or cardboard may be included as well. In exemplary embodiments discussed herein, reference may be made specifically to "paper" or "labels;" however, the operations, system elements, and methods of such exemplary applications may be applicable to media other than or in addition to the specifically mentioned "paper" or "labels." Physical print media may be used for personal communications, business communications, and/or the like to convey prose expression (including news, editorials, product data, academic writings, memos, and many other kinds of communications), data, advertising, fiction, entertainment content, and illustrations and pictures.

The terms "printer," "printing assembly" and "printing apparatus" may refer to a device that may imprint texts, images, shapes, symbols, graphics, and/or the like onto print media to create a persistent, human-viewable representation of the corresponding texts, images, shapes, symbols, graphics, and/or the like. Printers may include, for example, laser printers.

Further, the various embodiments disclosed herein is to describe a printing apparatus that capable of printing content using laser beams. More particularly, the disclosed embodiments disclose printing apparatus that is capable to utilize laser to directly write content on the print media. Further, such printing apparatus may be capable of printing more than 7000 labels in a day. Further, the printing apparatus disclosed herein is capable of printing content at multiple resolutions (varying from 200 dots per inch (dpi) to 600 dpi) and at multiple speeds (6 IPS to 12 IPS). By removing the reliance on the thermal print ribbon and thermal print head, the overall running cost of the printing apparatus is reduced.

Further, the printing apparatus may be capable of printing content, using one or more laser beams, on media have a predefined chemical compositions. In some examples, the printing apparatus may include a laser print head having one or more laser sources that are configured to facilitate direct printing, using one or more laser beams emanating from the one or more laser sources, of content on print media. Further and in some examples, the print media may have a predefined chemical composition that, in an instance in which it is exposed or otherwise contacted with energy from one or more laser beams, facilitate the print media to change color. Direct printing content on the print media allows fast printing of the content in comparison to many conventional printers.

The term "electromagnetic radiation" or "radiation" may refer to various kinds of electromagnetic radiant energy that exhibits properties of waves and particles including visible light, radio waves, microwaves, infrared (IR), ultraviolet (UV), X-rays and gamma rays. Visible light may refer to electromagnetic radiation or light that can be detected by a human eye. The electromagnetic spectrum comprises a range of all known types of electromagnetic radiation, including electromagnetic radiation or light that cannot be detected by the human eye. Various portions of the electromagnetic spectrum are associated with electromagnetic radiation that has certain characteristics (e.g., certain wavelengths and frequencies). For example, visible light emits electromagnetic radiation with wavelengths ranging between 380 and 750 nanometers (nm). IR emits electromagnetic radiation with wavelengths ranging between 780 nm and 1 micrometer (µm).

Electromagnetic radiant energy (e.g., visible light, IR or the like) comprises both electrical fields and magnetic fields. Non-polarized light may refer to light beams in which the electrical field associated therewith is oscillating in more than one direction. In contrast, polarized light may refer to light beams in which the electrical field associated therewith is oscillating in only one direction (e.g., vertically or up and down). In some examples, polarized light may be described with reference to a plane of incidence defined by an incoming propagation direction and the vector perpendicular to the plane of interface (e.g., the plane in which the light travels before and after it is reflected or refracted). Polarized light with its electric field parallel to or along the plane of incidence may be described as p-polarized, whereas light with an electric field that is normal to (e.g., perpendicular to) the plane of incidence may be described s-polarized.

The term "optical system" may refer to a one or more optical components (e.g., lenses, mirrors, light sources, screens, prisms, light dispersing devices, films, filters, fiber-optic elements, detecting elements, sensing elements, and/or the like) configured to condition an output of a light source (e.g., polarize, collimate, circularize and/or focus a laser beam). Various apparatuses (such as, but not limited to, a printing apparatus) may comprise optical components such as, but not limited to, mirrors, which may be utilized to direct and/or reflect incident light beams (e.g., laser beams) at particular angle(s). For example, an optical component (e.g., mirror) may be configured for a particular incident accept angle (e.g., 60%) or range. Additionally, an optical component (e.g., mirror) may comprise optical coatings (i.e., optical films) to enhance reflectance characteristics. However, such optical components (e.g., mirrors) may only perform optimally within a narrow optical spectrum range (e.g., either visible light or IR) or within a narrow incident accept range. Additionally, such optical components and optical coatings are generally complex and difficult to produce, often requiring expensive materials (e.g., gold).

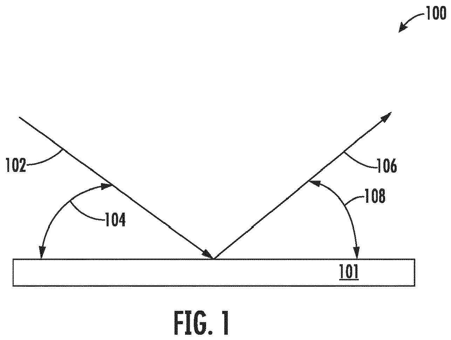

Referring now to FIG. 1, a schematic diagram depicting at least a portion of an optical system 100 in accordance with various embodiments of the present disclosure is provided. As depicted, the example portion of an optical system 100 comprises an optical component 101.

The optical component 101 may be or comprise a reflective substrate configured to condition an incident primary beam 102 (e.g., a laser beam) generated by a light source (e.g., a laser system). As depicted in FIG. 1, the optical component 101 comprises a substantially planar substrate. In some examples, the optical component 101 may be or comprise a mirror. As further depicted, the optical component 101 is configured to condition (e.g., reflect and/or refract) an incident primary beam 102 having a first angle of incidence 104 in order to produce a secondary beam 106 at a second angle of incidence 108 which is different from the first angle of incidence 104. In various examples, the optical component 101 may operate to modify or change an angle of incidence associated with an incident primary beam 102 while reflecting the majority of the incident primary beam 102 in order to mitigate energy losses within an example optical system. Said differently, the optical component 101 may be configured, in some cases, to reflect as much incident electromagnetic radiation (e.g., visible light or infrared) as possible. A high performing optical component 101 may exhibit high reflectance level measurements (e.g., above 97% or 99%) within a particular range of electromagnetic radiation (e.g., visible light or infrared). In various embodiments, an optical system may comprise one or more optical components 101 configured to provide a secondary beam 106 with particular characteristics (e.g., at a particular angle of incidence).

In accordance with various embodiments of the present disclosure, example methods, apparatuses and systems are provided.

For example, the present disclosure may provide an optical component comprising an optical coating. In some examples, the optical coating may comprise a visible light reflective layer disposed adjacent a surface of the optical component, at least a first non-visible light reflective layer disposed adjacent the visible light reflective layer and at least a second non-visible light reflective layer disposed adjacent the first non-visible light reflective layer. The example visible light reflective layer may comprise Aluminum or Chromium. The example at least a first non-visible light reflective layer may comprise Silicon Dioxide (SiO₂). The example at least a second non-visible light reflective layer may comprise Titanium Dioxide (TiO₂ ). The example surface of the optical component may comprise a glass substrate or optical plastic. In some examples, the visible light reflective layer has a thickness between 110 nm and 200 nm. In some examples, the first non-visible light reflective layer has a thickness between 180 nm and 400 nm. In some examples, the second non-visible light reflective layer has a thickness between 180 nm and 700 nm. In some examples, the optical component may be a component of a printing apparatus. In some examples, the optical coating comprises a plurality of alternating layers of the at least a first non-visible light reflective layer and the at least a second non-visible light reflective layer. In some examples, a method for manufacturing an optical component comprising an optical coating is provided. In some examples, the method may comprise depositing a visible light reflective layer unto at least a surface of the optical component, depositing at least a first non-visible light reflective layer unto the visible light reflective layer; and depositing at least a second non-visible light reflective layer unto the first non-visible light reflective layer. In some examples, the method further comprises evaporating at least a portion of the optical coating. In some examples, the visible light reflective layer comprises Aluminum or Chromium. In some examples, the at least a first non-visible light reflective layer comprises SiO₂. In some examples, at least a second non-visible light reflective layer comprises TiO₂. In some examples, the optical component is at least partially manufactured under high vacuum conditions. In some examples, the visible light reflective layer has a thickness between 110 nm and 200 nm. In some examples, the at least a first non-visible light reflective layer has a thickness between 180 nm and 700 nm. In some examples, the at least a second first non-visible light reflective layer has a thickness between 180 nm and 400 nm. In some examples, the optical component is a component of a printing apparatus.

The systems, methods and techniques described herein provide optical components with coatings that may facilitate acceptance of a large optical incident accept angle range (e.g., between 0 and 80 degrees). Additionally, the optical components and coatings described herein provide improved reflectivity performance for both non-polarized and s-polarized light. In some examples, reflectance level measurements for an optical component in relation to s-polarized light may be over 99%. Moreover, the optical components and coatings exhibit improved performance within a wide optical spectrum range (e.g., between 400 nm and 1400 nm or between 950 nm and 1400 nm). Additionally, the optical components and optical coatings exhibit high environmental stability and performance in a variety of applications.

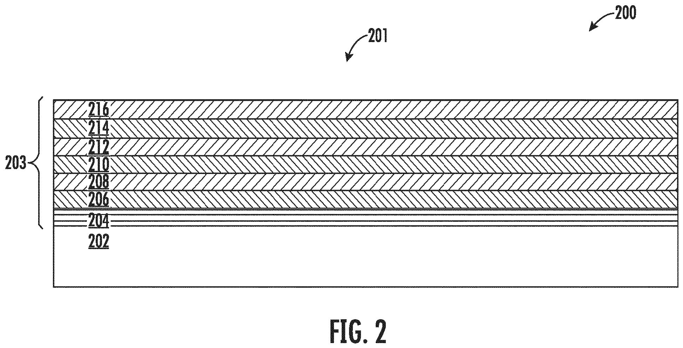

Referring now to FIG. 2, a schematic diagram depicting a side section view of an example optical component 200 in accordance with various embodiments of the present disclosure is provided. The example optical component 200 may be configured to condition (e.g., polarize, collimate, circularize and/or the like) an incident primary beam 201 in order to produce a secondary a secondary beam with particular characteristics. In various examples, the example optical component 200 may comprise an optical coating 203 defining a plurality of different layers of various materials. The optical coating 203 may be configured to improve and/or enhance performance of the optical component 200. In some examples, a plurality of layers of materials may be deposited (e.g., sequentially) onto a substrate (e.g., a glass substrate) in order to form the example optical coating 203. The example coating may comprise one or more alternating layers of visible light reflective layers (e.g., Aluminum and/or Chromium) and non-visible light reflective layers (e.g., alternating between TiO₂ and SiO₂).

As depicted in FIG. 2, the example optical component 200 comprises an optical coating 203 defined by a plurality of layers of different materials. The example optical component 200 defines a unitary body comprised of the substrate 202 and optical coating 203. The example optical component 200 may be configured to operate within a wide target optical spectrum range. By way of example, the optical component 200 may be configured to operate in conjunction with an example optical system having a target optical spectrum value or range (e.g., in some examples, 1064 nm or between 400 and 1400 nm). In some examples, the optical component 200 (e.g., the substrate 202 and optical coating 203) may have a thickness dimension between 400 nm and 1400 nm (e.g., 1154.27 nm). In various examples, the optical component 200 comprises alternating layers of visible light reflective layers (e.g., alternating between SiO₂ and TiO₂). In various examples, each set or cycle of alternating non-visible light reflective layers (e.g., SiO₂ and TiO₂ layers) may operate to enhance reflectivity parameters (e.g., within a particular optical spectrum range) of an example optical component 200, thereby improving performance of the optical component 200 and the optical system associated therewith. In some examples, each set of alternating non-visible light reflective layers (e.g., SiO₂ and TiO₂ layers) may also operate to further modify/improve (e.g., expand) the optical spectrum range/window of the optical component 200.

As noted above, and as depicted in FIG. 2, the example optical component 200 comprises a substrate 202 having a plurality of layers deposited thereon. The example substrate 202 of the optical component may be or comprise glass or similar materials. In some examples, the example substrate 202 has a refractive index of 1.51 and an extinction co-efficient of 0. As noted above, the example optical component 200 an optical coating 203 defining a plurality of layers of materials.

As depicted in FIG. 2, the example optical component 200 comprises a first visible light reflective layer 204 disposed adjacent the substrate 202. The first visible light reflective layer 204 may operate to condition incident visible light (e.g., between a range of 380 and 750 nm). In some examples, the first visible light reflective layer 204 may comprise Aluminum, Chromium, combinations thereof, and/or the like. In some examples, the first visible light reflective layer 204 (e.g., Aluminum and/or Chromium layer) has a refractive index of 1.3 and an extinction coefficient (e.g., defining an amount of light absorbed by a medium) of 7.11. The first visible light reflective layer 204 may operate to reflect at least a portion of incident light within a particular optical spectrum range (e.g., visible light). A thickness of the first visible light reflective layer 204 (e.g., Aluminum layer) may be between 110 nm and 200 nm. In another example, a thickness of the Chromium layer may be less than 110 nm (e.g., between 20 nm and 50 nm).

As depicted in FIG. 2, the example optical component 200 comprises a second non-visible light reflective layer 206 (e.g., Si02 layer) disposed adjacent (e.g., on top of) a surface of the first visible light reflective layer 204 (e.g., Aluminum and/or Chromium layer). The second non-visible light reflective layer 206 (e.g., SiO₂ layer) may operate to condition incident non-visible radiation or light (e.g., infrared), for example, between a range of 780 nm and 1 µm or above 1 µm. In some examples, the second non-visible light reflective layer 206 (e.g., SiO₂ layer) has a refractive index of 1.45654 and an extinction coefficient of 0. A thickness of the second non-visible light reflective layer 206 (e.g., Si02 layer) may be between 180 nm and 700 nm.

As depicted in FIG. 2, the example optical component 200 comprises a third non-visible light reflective layer 208 (e.g., TiO₂ layer) disposed adjacent (e.g., on top of) a surface of the second non-visible light reflective layer 206 (e.g., SiO₂ layer). The third non-visible light reflective layer 208 (e.g., TiO₂ layer) may operate to condition incident non-visible radiation or light (e.g., infrared). In some examples, the third non-visible light reflective layer 208 (e.g., TiO₂ layer) has a refractive index of 2.27401 and an extinction coefficient of 0.00021. A thickness of the third non-visible light reflective layer 208 (e.g., Ti02 layer) may be between 180 nm and 400 nm.

As depicted in FIG. 2, the example optical component 200 comprises a fourth non-visible light reflective layer 210 (e.g., SiO₂ layer) disposed adjacent (e.g., on top of) a surface of the third non-visible light reflective layer 208 (e.g., TiO₂ layer). The fourth non-visible light reflective layer 210 (e.g., SiO₂ layer) may operate to condition incident non-visible radiation or light (e.g., infrared). In some examples, the fourth non-visible light reflective layer 210 (e.g., SiO₂ layer) has a refractive index of 1.45654 and an extinction coefficient of 0. A thickness of the fourth non-visible light reflective layer 210 (e.g., SiO₂ layer) may be between 180 nm and 700 nm.

As depicted in FIG. 2, the example optical component 200 comprises a fifth non-visible light reflective layer 212 (e.g., TiO₂ layer) disposed adjacent (e.g., on top of) a surface of the fourth non-visible light reflective layer 210 (SiO₂ layer). The fifth non-visible light reflective layer 212 (e.g., TiO₂ layer) may operate to condition incident non-visible radiation or light (e.g., infrared). In some examples, the fifth non-visible light reflective layer 212 (e.g., TiO₂ layer) has a refractive index of 2.27401 and an extinction coefficient of 0.00021. A thickness of the fifth non-visible light reflective layer 212 (e.g., TiO₂ layer) may be between 180 nm and 400 nm.

As depicted in FIG. 2, the example optical component 200 comprises a sixth non-visible light reflective layer 214 (e.g., SiO₂ layer) disposed adjacent (e.g., on top of) a surface of the fifth non-visible light reflective layer 212 (e.g., TiO₂ layer). The sixth non-visible light reflective layer 214 (e.g., SiO₂ layer) may operate to condition incident non-visible radiation or light (e.g., infrared). In some examples, the sixth non-visible light reflective layer 214 (SiO₂ layer) has a refractive index of 1.45654 and an extinction coefficient of 0. A thickness of the sixth non-visible light reflective layer 214 (Si02 layer) may be between 180 nm and 700 nm.

While FIG. 2 provides an example of an optical component 200 having an optical coating 203, it is noted that the scope of the present disclosure is not limited to the example shown in FIG. 2. In some examples, an example optical component 200 may comprise one or more additional and/or alternative elements, and/or may be structured/positioned differently than those illustrated in FIG. 2. For example, the optical component 200 in accordance with the present disclosure may comprise an optical coating 203 with more than three or less than three alternating sets or cycles of non-visible light reflective layers (e.g., alternating between SiO₂ and TiO₂). In another example, the optical component 200 in accordance with the present disclosure may comprise two or more visible light reflective layer (e.g., two visible light reflective layers) for instance, comprising Aluminum, Chromium, combinations thereof, and/or the like.

In various examples, an optical component comprising an optical coating may operate to condition (e.g., polarize, collimate, circularize and/or the like) an incident primary beam (e.g., having a wavelength between 650 nm and 1300 nm) in order to produce a secondary a secondary beam with particular characteristics. In one example, a thickness of the optical component comprising an optical coating may range between 1100 nm and 1200 nm. In the above example, reflectance level measurements of the optical component may range between 60% - 99%. For instance reflectance level measurements of the optical component below may be above 95% for wavelengths of incident light between 950 nm and 1400 nm. Accordingly, in various examples, parameters of the example optical component and optical coating (e.g., thickness of each layer of the example optical coating) may be varied in order to provide an optical component configured to operate within a particular optical spectrum range.

Accordingly, in various examples, parameters of the example optical component and optical coating (e.g., thickness of each layer of the example optical coating) may be varied in order to provide an optical component configured to operate within a particular optical spectrum range.

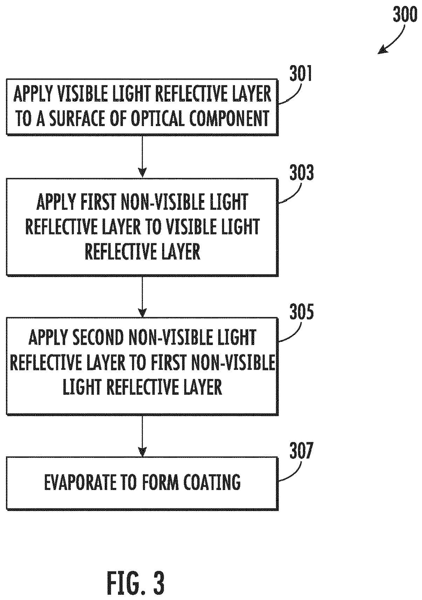

Referring now to FIG. 3, a flowchart diagram depicting an example method 300 for producing an optical component in accordance with various embodiments of the present disclosure is provided.

Beginning at step/operation 301, the method 300 may begin with applying a visible light reflective layer (e.g., an Aluminum layer or Chromium layer) to at least a surface of an optical component (e.g., a glass substrate). In some examples, Aluminum or Chromium material may be deposited directly unto at least one surface of the example optical component. The visible light reflective layer may be similar to the first visible light reflective layer 204 described above in connection with FIG. 2. In some examples, the method 300 may comprise a physical deposition process, chemical vapor deposition or any other suitable method.

Subsequent to step/operation 301, the method 300 may proceed to step/operation 303. At step/operation 303, a first non-visible light reflective layer (e.g., SiO₂ layer) is applied to the visible light reflective layer (e.g., Aluminum or Chromium layer). In some examples, SiO₂ material may be deposited directly unto the visible light reflective layer. The first non-visible light reflective layer may be similar to the second non-visible light reflective layer 206, fourth non-visible light reflective layer 210 and sixth non-visible light reflective layer 214 described above in connection with FIG. 2.

Subsequent to step/operation 301, the method may proceed to step/operation 305. At step/operation 305, a second non-visible light reflective layer (e.g., Ti02 layer) is applied to the first non-visible light reflective layer. In some examples, Ti02 material may be deposited directly unto the non-visible light reflective layer. The second non-visible light reflective layer may be similar to the third non-visible light reflective layer 208, fifth non-visible light reflective layer 212 and seventh non-visible light reflective layer 216 described above in connection with FIG. 2.

Subsequent to step/operation 305, the method may proceed to step/operation 307. At step/operation 307, subsequent to applying a target number of visible light reflective layers and non-visible light reflective layers to an optical component, an electrical device (e.g., electrical gun, electrical laser or electrical beam) may be utilized to further treat (e.g., evaporate at least a portion of) the example coating of the optical component. In some examples, the example optical component may be processed in a processing chamber under high vacuum conditions. A controller may be utilized to automatically and/or dynamically measure and adjust parameters of the method based on target parameters (e.g., adjust thickness of each of a plurality of layers) and/or environmental conditions. In some examples, at least a portion of the example method 300 may occur at room temperature.

Although FIG. 3 illustrates one example of a method 300 for producing a coated optical component, other methods may be utilized. For example, while shown as a series of operations/steps, various operations/steps in FIG. 3 could overlap, occur in parallel, occur in a different order, or occur multiple times. For instance, as described above in connection with FIG. 2, three alternating layers (i.e., three cycles) of Si02 and Ti02 may be applied to at least a surface of the example optical component.

As noted above, in some examples, one or more optical components may be part of a printing apparatus/assembly. In some examples, to facilitate printing content using laser beams, an example print head of a printing apparatus may include a laser subsystem. The laser subsystem may further include one or more laser sources and optical assemblies/components. The one or more laser sources may be configured to generate one or more laser beams that are directed through the optical assemblies so as to focus energy on the print media for printing content.

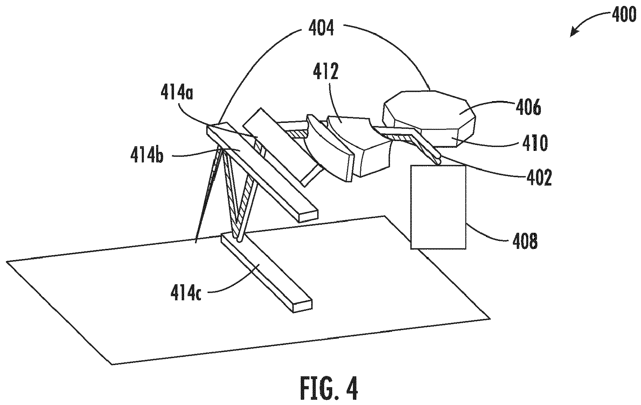

Referring now to FIG. 4, a schematic diagram illustrating an example view of a laser subsystem 400, in accordance with various embodiments of the present disclosure is provided. As depicted, the laser subsystem 400 includes one or more laser sources 402 and an optical assembly 404.

In an example embodiment, the one or more laser sources 402 include suitable logic and/or circuitry that may enable the one or more laser sources 402 to generate one or more laser beams. In some examples, the one or more laser sources 402 may be capable of generating the one or more laser beams of different wavelengths. For example, the one or more laser sources may be capable of generating the one or more laser beams that have wavelength between 950 nm to 1400 nm. The one or more laser sources 402 may include, for example, without limitation, gas laser sources, chemical laser source, excimer laser sources, solid state laser sources, fiber laser sources, photonic crystal laser sources, semiconductor based laser sources, dye laser sources, free electron laser sources, and/or the like. In some examples, the one or more laser sources 402 may be configured to product a writing laser beam and a preheating laser beam. In some examples, the writing laser beam has a wavelength above 600 nm. In some examples, the preheating laser beam has a wavelength above 950 nm (e.g., 1064 nm).

In some examples, the optical assembly 404 may be positioned with respect to the one or more laser sources 402 and are configured to direct one or more laser beams (e.g., a writing laser beam and/or a preheating laser beam) onto an example print media. In some embodiments, the optical assembly 404 includes a polygon mirror 406 that may be coupled to an actuation unit 408. The actuation unit 408 may include suitable logic and/or circuitry that may facilitate rotation of the polygon mirror 406 at a predetermined speed. In an example embodiment, the polygon mirror 406 may have one or more reflective surfaces 410, where a count of the one or more reflective surfaces 410 is dependent on a shape of the polygon mirror that defines the one or more reflective surfaces 410. For example, if the shape of the polygon mirror corresponds to an octagon, the count of the one or more reflective surfaces 410 is eight. The polygon mirror 406 is so positioned with respect to the one or more laser sources 402 such that the polygon mirror 406 reflects laser beams (e.g., a writing laser beam and/or a preheating laser beam) along a predetermined direction. In particular, the one or more reflective surfaces 410 may reflect an example writing laser beam and/or example preheating laser beam in the predetermined direction based on an angle of incidence between the writing laser beam and the preheating laser beam and a reflective surface of the one or more reflective surfaces 410. In an example embodiment, when the polygon mirror 406 is rotated, the angle of incidence between the writing laser beam and the preheating laser beam and a reflective surface 410 may vary due to which the direction in which the writing laser beam and the preheating laser beam are reflected varies.

As depicted in FIG. 4, the example optical assembly 404 further includes a plurality of lenses 412 through which the reflected beam passes. In an example embodiment, the plurality of lenses may be configured to respectively converge the writing laser beam and the preheating laser beam. The optical assembly 404 further includes one or more folding mirrors 414a, 414b, 414c, and 414d that are positioned downstream of the plurality of lenses 412. In some examples, the plurality of folding mirrors 414a, 414b, 414c, and 414d may be configured to modify a direction of the writing laser beam and the preheating laser beam. More particularly, the one or more folding mirrors 414a, 414b, 414c, and 414d may direct the writing laser beam and the preheating laser beam on a print media.

Since the writing laser beam and the preheating laser beam sweep due to rotation of the polygon mirror 406, the writing laser beam and the preheating laser beam may sweep across a width of the example print media. When the laser impinges on the print media, a color of the print media may be modified. The modification of the color of the print media may correspond to the printed content.

In some examples, the scope of the disclosure is not limited to the one or more laser sources 402 generating the writing laser beam and the preheating laser beam, where the writing laser beam is configured to write content on print media and the preheating laser beam is configured to pre-heat the print media. In an example embodiment, the one or more laser sources 402 may be configured to generate more than one writing laser beams. For example, the one or more laser sources 402 may be configured to generate three writing laser beams such that the three writing laser beams are configured to write content on the print media. To this end, the three writing laser beams are configured to be directed onto the print media through the optical assembly 404. To this end, the three writing laser beams may be directed onto the print media to be adjacent to each other along the print path. In some examples, the first three laser beams may be configured to concurrently print three adjacent lines of the print media. In such an embodiment, the first three laser beams may be configured to print different data. In some examples, a set of the three writing laser beams may be disabled during the printing operation. In yet another example, the three writing laser beams may be configured to print same data. In an example embodiment, the three writing laser beams may be configured per one or more configuration settings of the printing apparatus. In some examples, the one or more configuration settings may include, but are not limited to, a resolution at which the content is to be printed, a speed of the print media traversal along the print path, and/or the like.

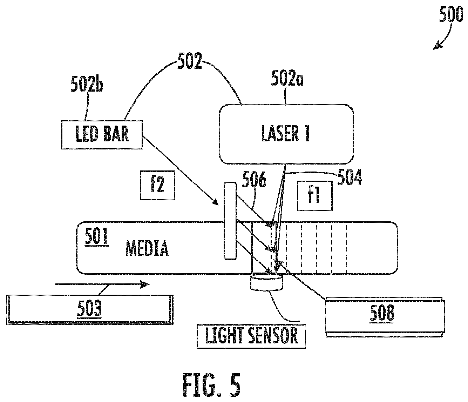

Referring now to FIG. 5, an example optical assembly for printing content on print media is further illustrated. FIG. 5 depicts a schematic diagram 500 illustrating an example assembly for printing of content on a print media 501 in accordance with various embodiments of the present disclosure.

As depicted in FIG. 5, the example print media 501 may traverse along a print path 503. As further depicted in FIG. 5, the example optical assembly comprises one or more laser sources 502. In some examples, a first laser source 502a may be configured to generate a writing laser beam 504, while a second laser source 502b may be configured to generate a preheating laser beam 506. In some examples, the preheating laser beam 506 is configured to 508 illuminate a portion of the print media 508. Illumination of the portion of the print media causes a photochromatic process to occur, thereby allowing the writing laser beam 504 of a first predetermined wavelength to pass through. Accordingly, when the writing laser beam 504 of the a predetermined wavelength is directed onto the print media 501, the writing laser beam 504 causes the portion of the print media 508 to change color. As the print media 501 traverses along the print path 503, the portion of the print media 508 moves along the print path 503. Accordingly, the portion of the print media 508 gets unexposed from the preheating laser beam 506.

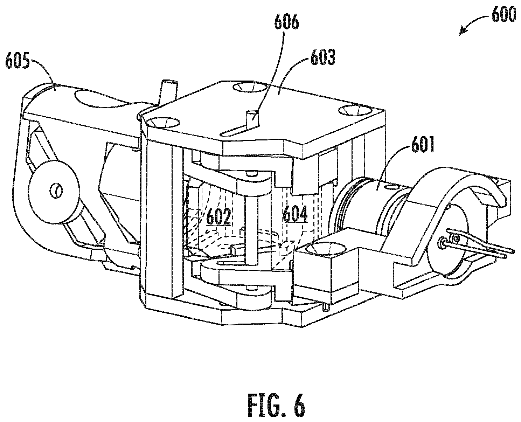

Referring now to FIG. 6, an example schematic diagram depicting an optical assembly 600 in accordance with various embodiments of the present disclosure is provided. In various examples, the optical assembly 600 may be configured to control or condition a laser beam (e.g., collimate, circularize and/or focus a laser beam). As depicted in FIG. 6, the optical assembly 600 comprises a plurality of optical components. As depicted, the optical assembly 600 comprises a collimating component 601, a beam control component 603 and a focusing component 605.

As depicted in FIG. 6, the optical assembly 600 comprises a collimating component 601 configured to collimate an output of a laser source (e.g., control a resolution of a laser beam in a cross-scan dimension). In various examples, the collimating component 601 may be or comprise one or more pluralities of lenses (e.g., one or more groups of lenses). The optical assembly 600 may be configured to operate with various types of laser sources/diodes, such as, but not limited to, a multi-mode laser, a single-mode laser, or the like. In some examples, the collimating component 601 may be removably attached to or otherwise connected/coupled to an example laser assembly (e.g., comprising a laser source) so as to collimate an output (i.e., laser beam(s)) generated by the laser assembly. For example, at least one surface of the collimating component 601 may be disposed adjacent at least a surface of an example laser assembly. In various examples, at least a portion or surface of the optical assembly 600 may be coated so that the optical assembly 600 can provide a large optical incident accept angle (e.g., between 0 and 80 degrees). Accordingly, the example optical assembly 600 may provide improved reflectivity performance for both non-polarized and s-polarized light. Further, the optical assembly 600 can provide improved performance within a wide optical spectrum range (e.g., between 400 nm to 1400 nm). In some examples, a plurality of layers of materials may be deposited onto at least a surface of the optical assembly in order to form an example optical coating. The example optical coating may comprise at least one or more alternating layers of visible light reflective layers (e.g., Aluminum and/or Chromium) and non-visible light reflective layers (e.g., TiO₂ and SiO₂).

As noted above, and as depicted in FIG. 6, the optical assembly 600 comprises a beam control component 603. As shown, in some examples, at least a surface of the beam control component 603 is disposed adjacent a surface of the collimating component 601 such that a laser beam can traverse the collimating component 601 to reach the beam control component 603. As depicted, the beam control component 603 comprises a pair of prisms 602 and 604 (e.g., an anamorphic prism pair) configured to modify a dimension of a laser beam along one axis. For example, the beam control component 603 may operate to modify the shape of a laser beam by adjusting angles between a laser beam and the example pair of prisms. In various examples, the beam control component 603 may operate to modify an aspect ratio associated with a laser beam. For example, the beam control component 603 may operate to modify an elliptical beam shape generated by a laser source into a circular beam shape. In various examples, the size of a laser beam may be reduced or expanded based on an angular relative position of the pair of prisms. In various examples, as depicted, the example beam control component 603 comprises a control pin 606 for simultaneously adjusting relative positions of the pair of prisms 602 and 604.

As noted above, and as depicted in FIG. 6, the optical assembly 600 comprises a focusing component 605 configured to direct an output (e.g., laser beam) of the optical assembly 600 within an example printing apparatus (e.g., direct a laser beam to be incident on a print media). As shown, in some examples, at least a surface of the focusing component 605 may be disposed adjacent a surface of the beam control component 603 such that a laser beam traverses the beam control component 603 to reach the focusing component 605. In some examples, the focusing component 605 may comprise one or more mirrors. As noted above, at least a surface of the focusing component 605 (e.g., a surface of the one or more mirrors) may comprise an optical coating in accordance with the present disclosure in order to improve reflectivity and widen or expand the operational optical spectrum range of the optical assembly 600.

While some of the embodiments herein provide an example optical assembly 600, it is noted that the present disclosure is not limited to such embodiments. For instance, in some examples, optical assembly 600 in accordance with the present disclosure may comprise other elements, one or more additional and/or alternative elements, and/or may be structured/positioned differently than that illustrated in FIG. 6.

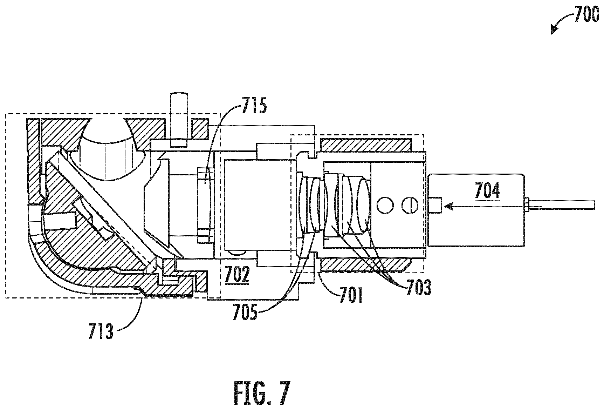

Referring now to FIG. 7, an example schematic diagram depicting a top section view of an optical assembly 700 in accordance with various embodiments of the present disclosure is provided. In various examples, the optical assembly 700 may be configured to collimate, circularize and/or focus laser beams. As depicted in FIG. 7, the optical assembly 700 comprises a collimating component 701 and a focusing component 713. The example optical assembly 700 may operate to collimate an output (i.e., laser beam(s)) generated by an example laser assembly (e.g., a multi-mode laser). In some examples, at least one surface of the collimating component 701 may be disposed adjacent at least a surface of the example laser assembly. In various examples, at least a portion or surface of the optical assembly 700 may comprise an optical coating in accordance with the present disclosure such that the optical assembly 700 can provide a large optical incident accept angle (e.g., between 0 and 80 degrees). Accordingly, the example optical assembly 700 may provide improved reflectivity performance for both non-polarized and s-polarized light. Further, the optical assembly 700 can provide improved performance within a wide optical spectrum range (e.g., between 400 nm to 1400 nm). In some examples, a plurality of layers of materials may be deposited onto at least a surface of the optical assembly in order to form an example optical coating. The example optical coating may comprise at least one or more alternating layers of visible light reflective layers (e.g., Aluminum and/or Chromium) and non-visible light reflective layers (e.g., TiO₂ and SiO₂).

As depicted in FIG. 7, the optical assembly 700 comprises a collimating component 701 configured to control a resolution in a cross-scan dimension of a laser beam (e.g., pre-energizing laser beam). As depicted, the collimating component 701 comprises a cylindrical member/barrel. In some examples, as depicted, the collimating component 701 is at least partially disposed within a housing 702 of the optical assembly 700. In various examples, the collimating component 701 may be or comprise one or more pluralities of lenses (e.g., one or more groups of lenses). As depicted, the collimating component 701 comprises a first plurality of lenses 703 and a second plurality of lenses 705. In some examples, as further depicted, the first plurality of lenses 703 comprises three spherical lenses and the second plurality of lenses 705 comprises two spherical lenses.

In some examples, the first plurality of lenses 703 may be disposed within and/or define a first end portion of the collimating component 701 (e.g., adjacent an example laser assembly). Said differently, the first plurality of lenses 703 may be disposed at a first distance with respect to an example laser assembly. The first plurality of lenses 703 may be configured to move independently (i.e., as a group) in relation to the second plurality of lenses 705. For example, the first plurality of lenses 703 may be configured to move horizontally along an example laser beam path 704.

As depicted in FIG. 7, the collimating component 701 comprises a second plurality of lenses 705. In some examples, the second plurality of lenses 705 may be disposed within and/or define a second end portion of the collimating component 701 (e.g., remote from an example laser assembly). Said differently, the second plurality of lenses 705 may be disposed at a second distance with respect to the example laser assembly such that the second plurality of lenses 705 is disposed further from the laser assembly than the first plurality of lenses 703. Thus, an example laser beam may travel from an example laser assembly to the first plurality of lenses 703 and subsequently reach the second plurality of lenses 705. The second plurality of lenses 705 may be configured to move independently (i.e., as a group) in relation to the first plurality of lenses 703. In various examples, the collimating component 701 may be configured to move within the housing 702 of the optical assembly 700 so as to vary the relative positions of the first plurality of lenses 703 and the second plurality of lenses 705. As depicted in FIG. 7, the collimating component 701 may be configured to retract in order to modify a distance between the first plurality of the lenses 703 and the second plurality of lenses 705. Referring again to FIG. 7, the example collimating component 701 is depicted in an extended state in comparison to the collimating component 701 depicted in FIG. 7 which is in a retracted state. Accordingly, the first plurality of lenses 703 and/or the second plurality of lenses 705 may be configured to move horizontally along the example laser beam path 704. In various examples, subsequent to reaching the second plurality of lenses 705, the example laser beam may then enter another component/element of the optical assembly/printing apparatus (e.g., in some examples, the focusing component 713).

As noted above, and as depicted in FIG. 7, the optical assembly 700 comprises a focusing component 713 configured to direct an output (e.g., laser beam) of the optical assembly 700 within an example printing apparatus (e.g., direct a laser beam to be incident on a print media). As shown, in some examples, at least a surface of the focusing component 713 may be disposed adjacent a surface of the collimating component 701 such that a laser beam can traverse the collimating component 701 to reach the focusing component 713. In some examples, as depicted, the focusing component 713 may comprise a focusing lens 715, one or more mirrors, and/or the like.

While some of the embodiments herein provide an example optical assembly 700, it is noted that the present disclosure is not limited to such embodiments. For instance, in some examples, optical assembly 700 in accordance with the present disclosure may comprise other elements, one or more additional and/or alternative elements, and/or may be structured/positioned differently than that illustrated in FIG. 7.

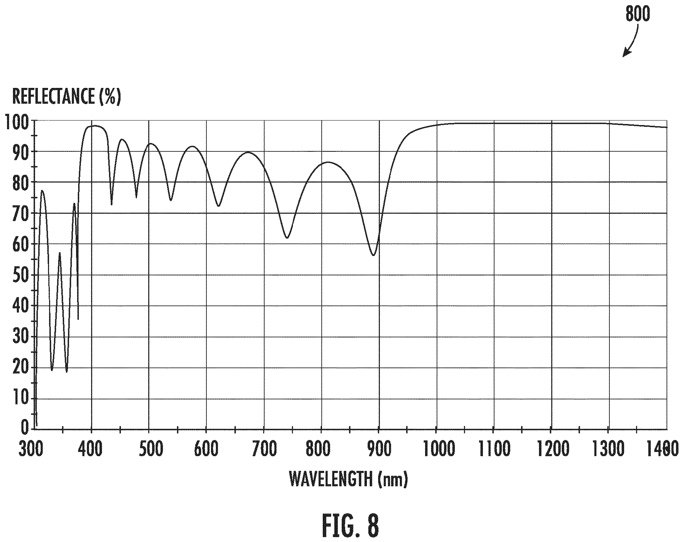

Referring now to FIG. 8, a graph 800 depicting example reflectance level measurements of an example optical component in accordance with various embodiments of the present disclosure is provided. As depicted in FIG 8. the x-axis represents a wavelength of incident light associated with an optical component (e.g., a mirror, an optical assembly, or the like) comprising an optical coating in accordance with various embodiments of the present disclosure. As depicted, the y-axis represents reflectance level measurements for the example optical component. The reflectance level measurements correspond with a ratio of percentage (%) of incident light that can be reflected by the example optical component.

As illustrated in FIG. 8, a plurality of reflectance level measurements associated with incident light of different wavelengths between 300 nm and 1400 nm are provided. As shown in FIG. 8, the reflectance level measurements associated with the example optical component range between 65% and close to 100% for incident light with wavelengths between 400 nm and 1000 nm. As further depicted, the reflectance level measurements associated with the example optical component range are above 97% for incident light with wavelengths above 1000 nm. Accordingly, FIG. 7 demonstrates that the optical performance of the example optical component covers a very broad optical spectrum (i.e., between 400 nm and 1400 nm). Moreover, the example optical component exhibit superior performance (above 65% overall and, in particular, above 97% for incident light with wavelengths between 1000 nm and 1400 nm). Accordingly, the optical coating/optical component(s) are suitable for a variety of applications in which, for example, performance across a wide optical spectrum is required. For example, the optical coating/optical component will perform optimally in optical systems using more than one type of laser source (e.g., a plurality of laser sources each generating laser beams of different wavelengths).

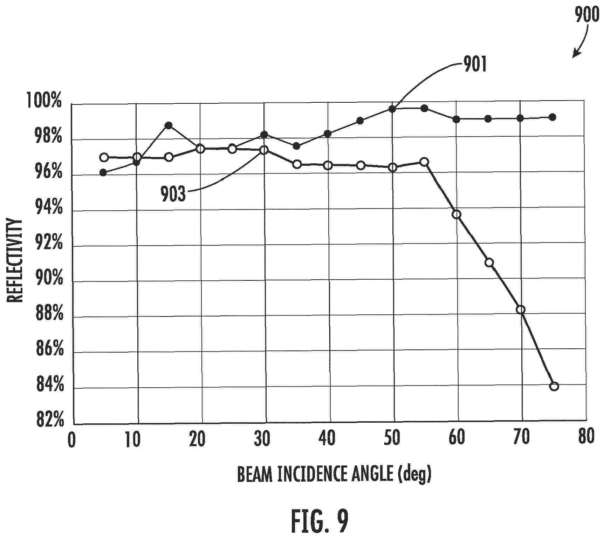

Referring now to FIG. 9, a graph 900 depicting example measurements of an example optical component in accordance with various embodiments of the present disclosure is provided. As depicted in FIG. 9, the x-axis represents a plurality of beam incidence angles associated with incident light. As depicted, the y-axis represents reflectance level measurements for the example optical component. The reflectance level measurements correspond with a ratio or percentage (%) of incident light that can be reflected by the example optical component. As illustrated in FIG. 9, the first line 901 of the graph 900 depicts a reflectance level measurement associated with s-polarized light incident on an example optical component. A second line 903 of the graph 900 depicts a reflectance level measurement associated with p-polarized light incident on an example optical component.

As depicted in FIG. 9, the reflectance level measurement associated with s-polarized light incident on the example optical component is above 86% for a beam incidence angle between 0% and 80%. As further depicted, the reflectance level measurement associated with p-polarized light incident on the example optical component is above 96% for a beam incidence angle between 0% and 80%. Additionally, the reflectance level measurement associated with p-polarized light incident on the example optical component is above 84% for a beam incidence angle between 55% and 75%. As shown, the example optical component exhibits high performance characteristics for both p-polarized light and s-polarized light sources across a wide range of beam incidence angles.

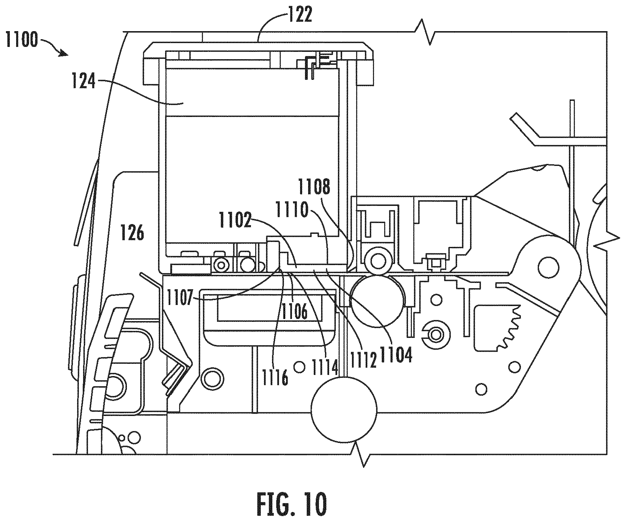

Referring now to FIG. 10, a schematic diagram depicting a sectional view of an example printing apparatus 1100 in accordance with various embodiments of the present disclosure is provided. In various embodiments, the printing apparatus 1100 comprises an optical system including one or more optical components including optical coatings as described herein. In some examples, the printing apparatus 1100 comprises one or more laser sources. The printing apparatus 1100 includes a media guide assembly 1102 positioned upstream of a print head engine 122. Further, the printing apparatus 1100 includes the second roller assembly 316 positioned downstream of the print head engine 122. In an example embodiment, the media guide assembly 1102 further includes an arm section 1104 and a groove section 1106.

In an example embodiment, the arm section 1104 is fixedly coupled to back-spine section 114 of the printing apparatus 1100. Further, the arm section 1104 extends along the lateral axis of the print head engine 122. Further, the arm section 1104 has a first end 1107 and a second end 1108. The first end 1107 of the arm section 1104 is defined to be proximal to the print head engine 122 and the second end 1108 is defined to be distal from the print head engine 122. Additionally, the arm section 1104 includes a top surface 1110 and a bottom surface 1112. The top surface 1110 is defined to be distal from the bottom chassis portion 128 of the print head engine 122, while the bottom surface 1112 is defined to be proximal to the bottom chassis portion 128.

In an example embodiment, the bottom surface 1112 is configured to define the groove section 1106 such that the groove section 1106 protrudes out from the bottom surface 1112 towards the bottom chassis portion 128 of the print head engine 122. In some examples, a distance between the bottom chassis portion 128 and the groove section 1106 is in a range of 0.4 mm to 0.6 mm. Further, when the print media is received on the bottom chassis portion 128, the print media is pressed by the groove section 1106 and the second roller assembly 316. To this end, the print media is flattened between the second roller assembly 316 and the media guide assembly 1102.

In some examples, the groove section 1106 may include a ramp section 1114 and a valley section 1116. The ramp section 1114 may face the second end 1108 of the arm section 1104 and may have a predetermined slope. Further, the valley section 1116 may face the first end 1107 of the arm section 1104. In some examples, the slope of the ramp section 1114 may facilitate smooth traversal of the print media along the print path. Accordingly, the ramp section 1114 may reduce the media jam possibility. In some examples, the scope of the disclosure is not limited to groove section 1106 having the aforementioned shape. In an example embodiment, the groove section 1106 may have any other shape without departing from the scope of the disclosure.

In some examples, a distance between the groove section 1106 and the bottom chassis portion 128 may be adjustable. In such an embodiment, the groove section 1106 may be coupled to the arm section 1104 through a coupling means such as a screw. An operator of the printing apparatus 1100 may rotate the screw clockwise and/or counter-clockwise to adjust a distance between the groove section 1106 and the bottom chassis portion 128. In such an embodiment, the distance between the groove section 1106 and the bottom chassis portion 128 may be adjusted 0.4 mm to 0.6 mm, dependent on media thickness and flatness requirement,

In some examples, the scope of the disclosure is not limited to a particular coupling means. In an example embodiment, the coupling means may further include a pen-click type mechanism. In such an embodiment, the operator of the printing apparatus 1100 may adjust a distance between the groove section 1106 and the bottom chassis portion by pressing a plunger coupled to the groove section 1106.

In some examples, the scope of the disclosure is not limited to having one media guide assembly 1102 in the printing apparatus 1100 to flatten the print media. In an example embodiment, the printing apparatus 1100 may include another media guide assembly positioned downstream of the print head engine 122. Further, in such an embodiment, the printing apparatus 1100 may be devoid of a second roller assembly.

In some examples, the scope of the disclosure is not limited to the printing apparatus 1100 include the media guide assembly 1102. In an example embodiment, the top chassis portion 126 of the print head engine 122 may define the groove section 1106 in the top chassis portion 126 of the print head engine 122. More particularly, the print head engine 122 may define the groove section at a bottom surface of the top chassis portion (which is proximal to the bottom chassis portion of the print head engine 122).

In some examples, the scope of the disclosure is not limited to the print head engine 122 including the first roller and the one or more second rollers. Additionally or alternatively, the printing apparatus 1100 may include a frame to flatten the print media.

Example apparatuses, systems, and methods described herein include a printing apparatus that is capable of flattening or substantially flattening print media prior to the printing operation. In some examples and in embodiments configured to flatten print media, the printing apparatus includes a platform that is capable of receiving the print media for printing operation. In some example, the printing apparatus may include a vacuum generating unit that is configured to generate a negative pressure on the platform so as to cause the print media stick to or otherwise be detachably attached to the platform. In some examples, the edges of the print media may curl during the application of the negative pressure on the platform. To de-curl the edges of the print media, the printing apparatus further includes a frame that may be configured to press upon the edges of the print media. To this end, the combination of the vacuum generating unit and the frame facilitates, in some examples, flattening of the print media.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An optical component comprising an optical coating, the optical coating comprising:
a visible light reflective layer disposed adjacent a surface of the optical component;
at least a first non-visible light reflective layer disposed adjacent the visible light reflective layer; and
at least a second non-visible light reflective layer disposed adjacent the first non-visible light reflective layer.

2. The optical component of claim 1, wherein the visible light reflective layer comprise Aluminum or Chromium.

3. The optical component of claim 1, wherein the at least a first non-visible light reflective layer comprise Silicon Dioxide (SiO₂).

4. The optical component of claim 1, wherein the at least a second non-visible light reflective layer comprises Titanium Dioxide (TiO₂).

5. The optical component of claim 1, wherein the surface of the optical component comprises a glass substrate.

6. The optical component of claim 1, wherein the visible light reflective layer has a thickness between 110 nanometers (nm) and 200 nm.

7. The optical component of claim 1, wherein the first non-visible light reflective layer has a thickness between 180 nm and 700 nm.

8. The optical component of claim 1, wherein the second non-visible light reflective layer has a thickness between 180 nm and 400 nm.

9. The optical component of claim 1, wherein the optical component is a component of a printing apparatus.

10. An optical component of claim 1, wherein the optical coating comprises a plurality of alternating layers of the at least a first non-visible light reflective layer and the at least a second non-visible light reflective layer.

11. A method for manufacturing an optical component comprising an optical coating, the method comprising:
depositing a visible light reflective layer unto at least a surface of the optical component;
depositing at least a first non-visible light reflective layer unto the visible light reflective layer; and
depositing at least a second non-visible light reflective layer unto the first non-visible light reflective layer.

12. The method of claim 11, further comprising evaporating at least a portion of the optical coating.

13. The method of claim 12, wherein the visible light reflective layer comprises Aluminum or Chromium.

14. The method of claim 11, wherein the at least a first non-visible light reflective layer comprises SiO₂.

15. The method of claim 11, wherein the optical component is a component of a printing apparatus.
